# EUROPEAN PATENT APPLICATION

(11) **EP 4 810 250 A1**
(43) Date of publication of application: **23.09.2026**
(21) Application number: 25164019.9
(22) Date of filing: 17.03.2025
(51) Int. Cl.: B32B 27/12, B32B 5/26, B32B 27/32, B32B 37/02, A45C 3/00

(54) **CLOTH SHEET FOR TRAVEL CARRIER AND MANUFACTURING DEVICE THEREOF**

(71) Applicant: Kim, Su Yeon, Uiwang-si, Gyeonggi-do, 16108 (KR); Park, Geum Chae, Gunpo-si, Gyeonggi-do, 15847 (KR)
(72) Inventor: Kim, Su Yeon, Uiwang-si, Gyeonggi-do, 16108 (KR); Park, Geum Chae, Gunpo-si, Gyeonggi-do, 15847 (KR)
(74) Representative: Stöckeler, Ferdinand

(57) **Abstract**

Proposed is a cloth sheet for travel carrier bags, the sheet including a cloth layer configured to include a first surface and a second surface opposite to the first surface, and to constitute an inner skin, a mesh layer configured to include a third surface and a fourth surface opposite to the third surface, and attached to the first surface in a laminated structure by thermal compression, and a polypropylene layer configured to include a fifth surface and a sixth surface opposite to the fifth surface, attached to the third surface in a laminated structure by thermal compression, and configured to constitute an outer skin, wherein the cloth sheet may have a sterilization layer by sterilizing at least one layer among the cloth layer, the mesh layer, and the polypropylene layer. In addition to this, various embodiments identified through the specification may be possible.

## Description

### Technical Field

The present disclosure relates to a cloth sheet for travel carrier bags and a device for manufacturing the cloth sheet.

### Description of the Related Art

A travel carrier may be a bag for storing and transporting items needed when traveling. Travel carrier bags can be divided into various types and sizes depending on style, destination, and travel period.

Travel carrier bags are made from a variety of hard case materials or soft case materials. Travel carrier bags made of hard cases are durable and have the advantage of protecting items, but they can be relatively heavy. Polycarbonate or aluminum alloy, for example, can be used as a hard case material.

Travel carrier bags made of soft cases are flexible and have the advantage of utilizing additional space, but they can be vulnerable to external shocks. Nylon or polyester, for example, can be used as a soft case material.

A travel carrier bag should be maintained and cared for after trip. After use, the interior of the bag needs to be cleaned and any damage to the wheels and handle of the bag needs to be checked for.

In particular, during long-term travel, a cover may be placed to prevent scratches on the exterior of the bag.

The above information may be provided as related art for the purpose of aiding understanding of the present disclosure. No claim or determination is made as to whether any of the foregoing may apply as prior art with respect to the present disclosure.

### SUMMARY

Travel carrier bags need to be stored in a clean condition after a short-term or long-term trip. However, when reused after long-term storage, the outer skin or inner skin of a carrier bag may emit unpleasant odors or odors harmful to the human body, which may cause discomfort to a user. An objective of the present disclosure is to solve this problem.

Objectives to be achieved in this document is not limited to the one mentioned above, and other objectives not mentioned can be clearly understood by those skilled in the art from the description below.

In order to achieve the above objective, according to an aspect of the present disclosure, there is provided a cloth sheet for travel carrier bags, the cloth sheet being sterilized to prevent the outer skin layer and/or inner skin layer of a travel carrier bag from producing harmful or unpleasant odors, and a device for manufacturing the cloth sheet.

A cloth sheet according to an embodiment may include: a cloth layer configured to include a first surface and a second surface opposite to the first surface, and to constitute an inner skin; a mesh layer configured to include a third surface and a fourth surface opposite to the third surface, and attached to the first surface in a laminated structure by thermal compression; and a polypropylene layer configured to include a fifth surface and a sixth surface opposite to the fifth surface, attached to the third surface in a laminated structure by thermal compression, and configured to constitute an outer skin, wherein the cloth sheet may have a sterilization layer by sterilizing at least one layer among the cloth layer, the mesh layer, and the polypropylene layer.

A device for manufacturing a cloth sheet according to an embodiment may include: a first transfer roller configured to transfer a cloth layer; a second transfer roller spaced apart from the first transfer roller and configured to transfer a mesh layer; a polypropylene supply part spaced apart from the first and second transfer rollers; a first thermal press roller disposed to be spaced apart from each of the first and second transfer rollers; and a second thermal press roller disposed to face the first thermal press roller with a fine gap, and configured to primarily thermal-presses, together with the first thermal press roller, the transferred mesh layer, a polypropylene layer provided on the mesh layer, and the cloth layer provided under the mesh layer to construct a cloth sheet.

According to various embodiments, the outer skin layer and/or inner skin layer of a travel carrier bag are sterilized, thereby providing a beneficial and pleasant feeling to a user.

The effects that can be obtained from the present disclosure are not limited to the effects mentioned above, and other effects not mentioned can be clearly understood by those skilled in the art from the description below.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a perspective view showing the exterior of a travel carrier bag according to an embodiment;
FIG. 2 is a cross-sectional view showing an enlarged view of a cloth sheet of a travel carrier bag according to an embodiment;
FIG. 3 is a cross-sectional view showing an enlarged view of a cloth sheet of a travel carrier bag according to an embodiment;
FIG. 4 is a cross-sectional view showing an enlarged view of a cloth sheet of a travel carrier bag according to an embodiment;
FIG. 5 is an exemplary view schematically showing a device for manufacturing a cloth sheet according to an embodiment; and
FIG. 6 is an exemplary view schematically showing a device for manufacturing a cloth sheet according to an embodiment.

In relation to the description of the drawings, identical or similar reference numerals may be used for identical or similar components.

### DETAILED DESCRIPTION

Hereinafter, with reference to the attached drawings, embodiments will be described in detail so that those skilled in the art can easily implement the present disclosure. However, the disclosed embodiments may be implemented in various different forms and are not limited to the embodiments described herein.

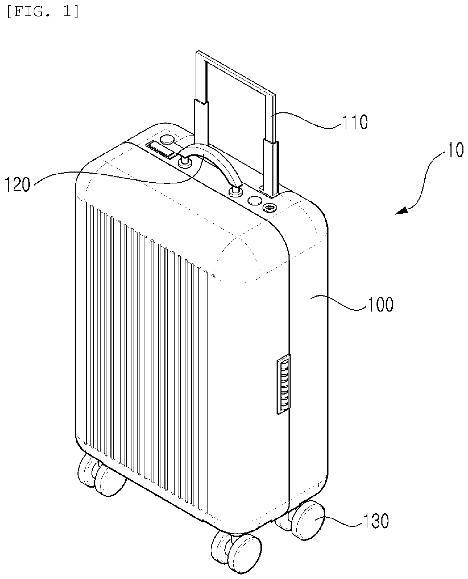

FIG. 1 is a perspective view showing the exterior of a travel carrier bag according to an embodiment.

Referring to FIG. 1, a travel carrier bag 10 is designed to be applicable to various environments that occur during travel, such as shock, rain, or friction, and the user can select an appropriate carrier bag depending on the purpose of travel and usage environment.

According to an embodiment, the travel carrier bag 10 may include a bag body 100, a plurality of wheels 130, and at least one handle. According to an embodiment, the bag body 100 is a place where various travel items are stored and may include an internal storage structure. For example, the internal storage structure (not shown) may include a mesh pocket, a separate partition, etc. According to an embodiment, the bag body 100 may be kept closed or locked using a zipper and/or a locking device.

According to an embodiment, the bag body 100 may have the plurality of wheels 130 installed on the bottom thereof. According to an embodiment, each wheel 130 is arranged to be rotatable 360 degrees, allowing the bag body 100 to move from the ground. According to an embodiment, a fixed handle 120 and a height-adjustable telescopic handle 110 may be disposed on the top of the bag body 100. According to an embodiment, the bag body 100 may be structurally reinforced with metal at the corners.

The travel carrier bag 10 having the above structure may be divided into a hard-shell carrier 10 and a soft-shell carrier depending on the fabric material. According to an embodiment, the cloth sheet of the hard-shell carrier is made of a material that is durable and has excellent shock absorption ability. For example, polycarbonate, ABS, or lightweight aluminum alloy may be used. According to an embodiment, the soft-shell carrier 10 is made of a material that is lightweight and can be selected from a variety of colors and designs. For example, synthetic resin materials such as nylon/polyester may be used, and other materials such as leather or mesh may be used.

According to an embodiment, the cloth sheet of the travel carrier bag 10 may be composed of a single layer or multiple layers, and when the cloth sheet is a single layer, the cloth sheet is formed of a single material, and may mainly be composed of a hard material such as aluminum. According to an embodiment, when the cloth sheet of the travel carrier bag 10 is composed of multiple layers, the cloth sheet is composed of multiple layers of a laminated type with various material characteristics, and the outer skin mainly includes a hard material, and the inner skin may be made of a soft material. In addition, the cloth sheet of the travel carrier bag 10 may have a multi-layer laminated structure with various material characteristics depending on the purpose of travel or external design.

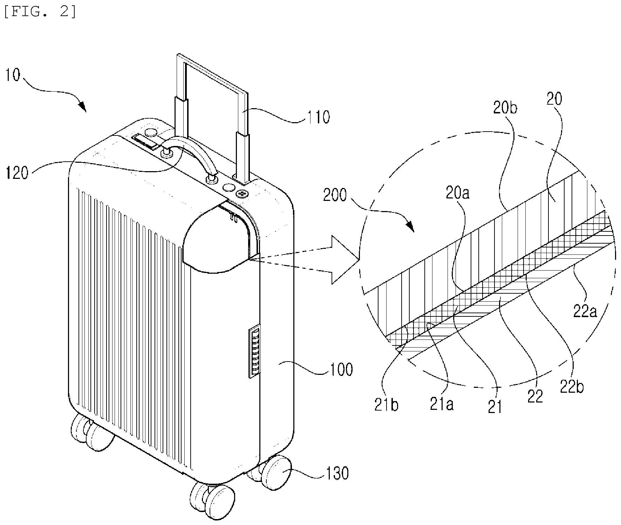

FIG. 2 is a cross-sectional view showing an enlarged view of a cloth sheet 200 of the travel carrier bag 10 according to an embodiment.

Referring to FIG. 2, according to an embodiment, the cloth sheet 200 of the travel carrier bag 10 is a case that constitutes at least a portion of the outer skin and inner skin of a carrier bag, which is lightweight, has a sterilizing function, and may have a multi-layer laminated structure including at least one sterilization layer. However, the cloth sheet 200 according to an embodiment does not need to be limited to the cloth of the travel carrier bag 10, and may be used as a cloth sheet 200 for various bags or bags.

According to an embodiment, the cloth sheet 200 may include a cloth layer 20, at least one mesh layer 21, and at least one polypropylene layer 22. According to an embodiment, the cloth sheet 200 may be manufactured as a single layer in which the cloth layer 20, at least one polypropylene layer 22, and a fragrance layer 23 are stacked vertically.

According to an embodiment, the cloth layer 20 has a sheet shape and may include a first surface 20a and a second surface 20b opposite to the first surface 20a. For example, the first surface 20a may be the upper surface, and the second surface 20b may be the lower surface.

According to an embodiment, the mesh layer 21 has a sheet shape and may include a third surface 21a and a fourth surface 21b opposite to the third surface 21a. For example, the third surface 21a may be the upper surface, and the fourth surface 21b may be the lower surface.

According to an embodiment, the polypropylene layer 22 has a sheet shape and may include a fifth surface 22a and a sixth surface 22b opposite to the fifth surface 22a. For example, the fifth surface 22a may be the upper surface, and the sixth surface 22b may be the lower surface.

According to an embodiment, in the cloth sheet 200, the mesh layer 21 may be disposed on the first surface 20a of the cloth layer 20, and the polypropylene layer 22 may be disposed on the third surface 21a of the mesh layer 21. For example, the mesh layer 21 is attached to the upper surface of the cloth layer 20, and the polypropylene layer 22 is attached to the upper surface of the mesh layer 21, so that the cloth sheet 200 may be used as a sterilized cloth sheet 200 with a single layer of a top-bottom laminated structure.

According to an embodiment, the cloth sheet 200 is a sterilized sheet, and may be a sterilized layer in which one or more layers of the cloth layer 20, the mesh layer 21, and the polypropylene layer 22 are sterilized. For example, in the cloth sheet 200, only the cloth layer 20 may be sterilized, only the mesh layer 21 may be sterilized, or only the polypropylene layer 22 may be sterilized. In addition, in the cloth sheet 200, only the cloth layer 20 and the mesh layer 21 may be sterilized, only the cloth layer 20 and the polypropylene layer 22 may be sterilized, only the mesh layer 21 and the polypropylene layer 22 may be sterilized, or all three layers listed above may be sterilized.

According to an embodiment, the cloth layer 20 is made of sterilized fabric and may be made in various designs or colors. For example, the fabric of the cloth layer 20 may be composed of natural fibers, synthetic fibers, or a mixture of these fibers. For example, the fabric constituting the cloth layer 20 has good breathability and may have absorbent or waterproof functions. The fabric layer 20 according to an embodiment may be sterilized during the manufacturing process of the cloth sheet 200 by coating, spraying, or placing in a solution the first surface 20a, the second surface 20b, both surfaces 20a, 20b, or the entire surface.

At this time, sterilization treatment by coating, spraying, or placing in a solution may be performed using a sterilizing solution.

The sterilizing solution may be a mixture of a sterilizing agent and a solvent in a specific ratio, and the sterilizing agent may be a metallic sterilizing agent such as silver, copper, zinc, gold, manganese, nickel, cobalt and cesium, may be a sterilizing agent that generates far-infrared rays such as germanium, chitosan, diatomaceous earth, Macbansuk, Macsumsuk, shell, red clay, illite, tourmaline, and kaolin, and may be a photocatalyst such as zinc oxide, titanium dioxide, iron oxide, tungsten oxide, copper oxide, tin oxide, vanadium oxide, and cerium oxide.

According to an embodiment, the mesh layer 21 is a sterilized fabric material layer. The mesh layer 21 does not need to be limited to being used as part of the cloth sheet 200 of the travel carrier bag 10, and may be used for bags, satchels, or clothing. The mesh layer 21 according to an embodiment provide a fragrance function by coating, spraying, or placing in a solution the third surface 21a or fourth surface 21b or both surfaces 21a and 21b or the entire mesh layer during the manufacturing process of the cloth sheet 200.

According to an embodiment, the polypropylene layer 22 is a thermoplastic plastic, a flexible plastic with heat resistance, chemical stability, and appropriate strength. The polypropylene layer 22 may provide the function of the exterior shape of the travel carrier bag 10 and may be the outer skin of the travel carrier bag. According to an embodiment, the polypropylene layer 22 may be molded using a mold to form the exterior of the travel carrier bag 10. According to an embodiment, the sterilized polypropylene layer 22 may be drawn out in a sheet shape after mixing a sterilizing agent in a polypropylene supply part.

At this time, as the sterilizing agent, a metallic sterilizing agent such as silver, copper, zinc, gold, manganese, nickel, cobalt and cesium may be used, and a sterilizing agent that generates far-infrared rays such as germanium, chitosan, diatomaceous earth, Macbansuk, Macsumsuk, shell, red clay, illite, tourmaline, and kaolin may be used. In addition, a photocatalyst such as zinc oxide, titanium dioxide, iron oxide, tungsten oxide, copper oxide, tin oxide, vanadium oxide, and cerium oxide may be used.

When forming the polypropylene layer 21 by supplying the sterilizing agent and polypropylene to the polypropylene supply part, 1 to 10 parts by weight of the sterilizing agent, specifically, 2 to 7 parts by weight, may be supplied based on 100 parts by weight of polypropylene.

If the content of the sterilizing agent is less than 1 part by weight, the polypropylene layer 21 cannot exert a sterilizing effect, and if the content exceeds 10 parts by weight, it may cause a decrease in the mechanical properties of the sheet.

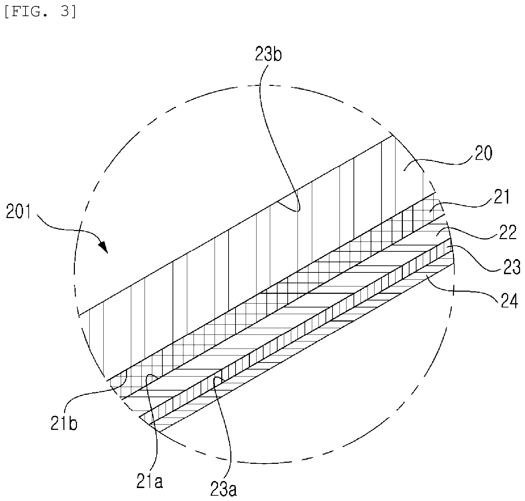

FIG. 3 is a cross-sectional view showing an enlarged view of a cloth sheet 201 of the travel carrier bag 10 according to an embodiment.

In describing the cloth sheet 201 with reference to FIG. 3, compared to the cloth sheet 200 shown in FIG. 2, the same structure will be omitted to avoid redundant description, and only the different structures will be described.

According to an embodiment, the cloth sheet 201 may have a printing layer 23 formed on the upper surface 22a of the polypropylene layer 22. For example, the printing layer 23 may be coated with various logos, trademarks, or designs in various colors.

According to an embodiment, the cloth sheet 201 may have an anti-scratch coating layer 24 formed on the upper surface 23a of the printing layer. According to an embodiment, the anti-scratch coating layer 24 may protect at least a portion of the polypropylene layer 22 on which the printing layer is not applied from external scratches, or may protect at least a portion of the printing layer 23.

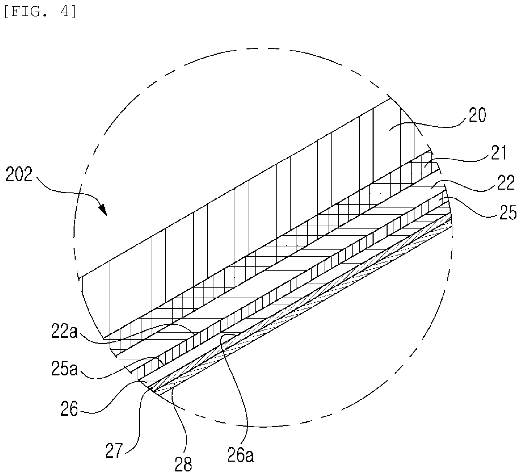

FIG. 4 is a cross-sectional view showing an enlarged view of a cloth sheet 202 of the travel carrier bag 10 according to an embodiment.

In describing the cloth sheet 202 with reference to FIG. 4, compared to the cloth sheet 200 shown in FIG. 2, the same structure will be omitted to avoid redundant description, and only the different structures will be described.

According to an embodiment, the cloth sheet 202 may have a sterilized second mesh layer 25 formed on the upper surface 22a of the polypropylene layer 22. The description of the mesh layer 25 will be omitted since it overlaps with the description of the mesh layer 21 of FIG. 2.

According to an embodiment, the cloth sheet 202 may have a second polypropylene layer 26 formed on the upper surface 25a of the second mesh layer. The description of the polypropylene layer 26 will be omitted since it overlaps with the description of the polypropylene layer 22 of FIG. 2.

According to an embodiment, the cloth sheet 202 may additionally have a printing layer 27 and an anti-scratch coating layer 28 formed on the upper surface 26a of the second polypropylene layer 26. According to an embodiment, the structure of the printing layer 27 and the anti-scratch coating layer 28 has been described with reference to FIG. 3, so detailed description will be omitted.

Hereinafter, a device for manufacturing the various cloth sheets 200-202 mentioned above will be described.

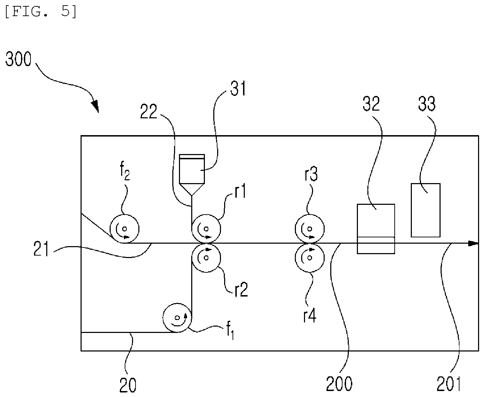

FIG. 5 is an exemplary view schematically showing a device for manufacturing the cloth sheet 200 according to an embodiment.

Referring to FIG. 5, a device 300 (hereinafter referred to as "manufacturing device") for manufacturing a cloth sheet 200 (e.g., the cloth sheet 200 shown in FIG. 2) according to an embodiment may include at least one transfer roller f1 or f2, a plurality of thermal press rollers r1-r4, and a polypropylene supply part 31.

According to an embodiment, the manufacturing device 300 may include first and second transfer rollers f1 and f2, a first thermal press roller r1, a second thermal press roller r2 facing the first thermal press roller r1 with a fine gap, a third thermal press roller r3 spaced apart from the second thermal press roller r2, and a fourth thermal press roller r4 facing the third thermal press roller r3 with a fine gap. According to an embodiment, the first thermal press roller r1 and the second thermal press roller r2 may be symmetrically arranged vertically, and the third thermal press roller r3 and the fourth thermal press roller r4 may be symmetrically arranged vertically. According to an embodiment, the first and second thermal press rollers r1 and r2 may primarily form the cloth sheet into a single layer in a sheet shape, and the third and fourth thermal press rollers r3 and r4 may secondarily form the cloth sheet into a single layer in a sheet shape.

According to an embodiment, the cloth layer 20 released from a cloth layer rolling unit (not shown) in which the cloth layer 20 is rolled is transferred toward the second thermal press roller r2 by the first transfer roller f1 rotating counterclockwise in a tight state, the mesh layer 21 released from a mesh layer rolling unit (not shown) in which the mesh layer 21 is rolled is transferred toward the first and second thermal press rollers r1 and r2, and the polypropylene layer 22 drawn out from a polypropylene supply part 31 may be transferred toward the first thermal press roller r1.

According to an embodiment, in the polypropylene supply part 31, a sterilizing agent is mixed and a sterilized polypropylene layer may be withdrawn. For example, the sterilization method of the polypropylene supply part may be any one of a high-temperature steam sterilization method, a dry heat sterilization method, a gas sterilization method, a radiation sterilization method, or a chemical sterilization method such as a disinfectant, considering the intended usage and thermal/chemical stability. In the present disclosure, the sterilization method of the polypropylene supply part 31 may be a chemical sterilization method such as a disinfectant.

Finally, the cloth layer 20, the mesh layer 21, and the polypropylene layer 22 may be manufactured into a single-layer laminated cloth sheet 200 by thermal compression of the first and second thermal press rollers r1 and r2 and the third and fourth thermal press rollers r3 and r4. Subsequently, using a mold (not shown), the manufactured cloth sheet 200 may be manufactured into the exterior shape of the main body of the travel carrier bag 10.

According to an embodiment, according to the manufacturing device 300, after forming the cloth sheet 200 shown in FIG. 2, a printing layer (e.g., the printing layer 23 shown in FIG. 3) of various logos or patterns may be created on the outer surface of the polypropylene layer 22 by a print unit 32. According to an embodiment, according to the manufacturing device 300, an anti-scratch coating layer 24 may be formed on the outer surface of the printing layer 23 by an anti-scratch unit 33. According to an embodiment, forming a printing layer using a printing unit 32 or forming an anti-scratch coating layer using the anti-scratch unit 33 may be skipped as needed.

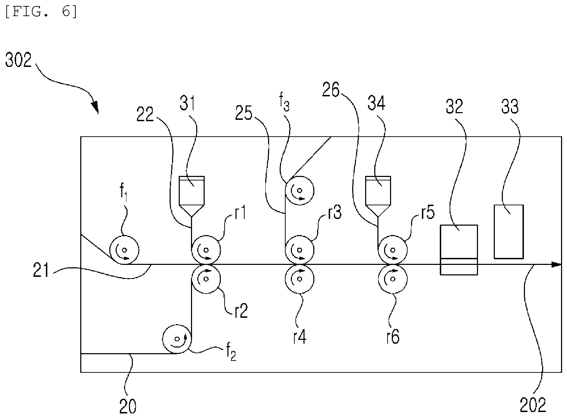

FIG. 6 is an exemplary view schematically showing a device for manufacturing a cloth sheet 202 according to an embodiment.

Referring to FIG. 6, a device 302 (hereinafter referred to as "manufacturing device") for manufacturing a cloth sheet 202 (e.g., the cloth sheet 202 shown in FIG. 4) according to an embodiment may include a plurality of transfer rollers f1, f2, and f3, a plurality of thermal press rollers r1-r6, and first and second polypropylene supply parts 31 and 34.

According to an embodiment, the manufacturing device 302 may include first to third transfer rollers f1-f3, first and second thermal press rollers r1 and r2, third and fourth thermal press rollers r3 and r4 spaced apart from the first and second thermal press rollers r1 and r2, fifth and sixth thermal press rollers r5 and r6 spaced apart from the third and fourth thermal press rollers r3 and r4.

According to an embodiment, the first thermal press roller r1 and the second thermal press roller r2 may be symmetrically arranged vertically, the third thermal press roller r3 and the fourth thermal press roller r4 may be symmetrically arranged vertically, and the fifth thermal press roller r5 and the sixth thermal press roller r6 may be symmetrically arranged vertically. According to an embodiment, the first and second thermal press rollers r1 and r2 may form the cloth sheet into a single layer in a sheet shape, the third and fourth thermal press rollers r3 and r4 may form the second mesh layer of the cloth sheet of FIG. 2 by thermal compression, and the fifth and sixth thermal press rollers r5 and r6 may form the second polypropylene layer on the upper surface of the second mesh layer by thermal compression.

According to an embodiment, the cloth layer 20 released from a cloth layer rolling unit (not shown) in which the cloth layer 20 is rolled is transferred toward the second thermal press roller r2 by the first transfer roller f1 rotating counterclockwise in a tight state, a first mesh layer 21 released from a mesh layer rolling unit (not shown) in which the mesh layer 21 is rolled is transferred toward the first and second thermal press rollers r1 and r2, and the polypropylene layer 22 drawn out from a first polypropylene supply part 31 may be transferred toward the first thermal press roller r1.

According to an embodiment, in the polypropylene supply part 31, a sterilizing agent is mixed and a sterilized polypropylene layer may be withdrawn. For example, the sterilization method of the polypropylene supply part may be any one of a high-temperature steam sterilization method, a dry heat sterilization method, a gas sterilization method, a radiation sterilization method, or a chemical sterilization method such as a disinfectant, considering the intended usage and thermal/chemical stability. In the present disclosure, the sterilization method of the polypropylene supply part 31 may be a chemical sterilization method such as a disinfectant.

At this time, the sterilizing agent may be the same as the sterilizing agent described previously.

According to an embodiment, the cloth layer 20, the first mesh layer 21, and a first polypropylene layer 22 may be formed as a single-layer laminated cloth sheet by thermal compression using the first and second thermal press rollers r1 and r2.

According to an embodiment, in the cloth sheet 200, the second mesh layer 25 may be formed on the upper surface of the first polypropylene layer 22 by thermal compression of the third and fourth thermal compression rollers r3 and r4. Subsequently, the second polypropylene layer 26 drawn from a second polypropylene supply part 34 is formed on the single sheet 200 on which the second mesh layer 25 is formed, so that the cloth sheet 202 with a single-layer laminated structure may be manufactured.

Subsequently, the manufactured cloth sheet 202 may be manufactured into the exterior shape of the main body of the travel carrier bag 10 using a mold (not shown).

According to an embodiment, according to the manufacturing device 302, after forming the cloth sheet 202, a printing layer of various logos or patterns may be created on the outer surface 26a of the second polypropylene layer 26 by the print unit 32. According to an embodiment, according to the manufacturing device 302, the anti-scratch coating layer 27 may be formed on the outer surface of the printing layer by the anti-scratch unit 33.

According to an embodiment, the cloth sheets 200, 201, and 202 may be beneficial to the user's health by implementing at least one layer among the cloth layer 20, the mesh layer 21, and the polypropylene layer 22 as a sterilized sterilization layer.

According to an embodiment, a cloth sheet of the travel carrier bag may include: a cloth layer 20 configured to include a first surface 20a and a second surface 20b opposite to the first surface 20a, and to constitute an inner skin; a mesh layer 21 configured to include a third surface 21a and a fourth surface 21b opposite to the third surface 21a, and attached to the first surface 20a in a laminated structure by thermal compression; and a polypropylene layer 22 configured to include a fifth surface 22a and a sixth surface 22b opposite to the fifth surface 22a, and to constitute an outer skin. The cloth sheet may have a sterilization layer by sterilizing at least one layer among the cloth layer 20, the mesh layer 21, and the polypropylene layer 22.

According to an embodiment, the cloth layer 20 and the mesh layer 21 may be sterilized, or all layers 20, 21, and 22 may be sterilized.

According to an embodiment, the polypropylene layer 22 may be sterilized by supplying a sterilizing agent to the polypropylene supply part 31 to be mixed during the manufacturing process of the polypropylene layer 22.

According to an embodiment, the polypropylene layer 22 may further include a printing layer 24 for creating various logos on the fifth surface 22a.

According to an embodiment, an anti-scratch coating layer 25 may be further provided on the printing layer 24.

According to an embodiment, sterilization treatment of the cloth layer 20 or the mesh layer 22 may be performed by one of the following methods: coating, spraying, or placing in a solution.

According to an embodiment, a device for manufacturing the cloth sheet 200 of a travel carrier bag may include: a first transfer roller f1 for transferring the cloth layer 20; a second transfer roller f2 spaced apart from the first transfer roller f1 and for transferring the mesh layer 22; a polypropylene supply part 31 spaced apart from the first and second transfer rollers f1 and f2; a first thermal press roller r1 disposed to be spaced apart from each of the first and second transfer rollers f1 and f2; and a second thermal press roller r2 disposed to face the first thermal press roller r1 with a fine gap, and configured to primarily thermal-presses, together with the first thermal press roller r1, the transferred mesh layer 22, the polypropylene layer 22 provided on the mesh layer 21, and the cloth layer 20 provided under the mesh layer 21 to construct the cloth sheet 200.

According to an embodiment, a fourth thermal press roller r4 may also be provided. The fourth thermal press roller r4 is spaced apart from the first and second thermal press rollers r1 and r2, and disposed to face the third thermal press roller r3 with a fine gap to secondarily thermal-press, together with the third thermal press roller r3, the cloth sheet consisting of a thermal-pressed cloth layer 20, the mesh layer 21, and the polypropylene layer 22.

According to an embodiment, the first and second thermal press rollers r1 and r2 are symmetrically arranged vertically, and the third and fourth thermal press rollers r3 and r4 are symmetrically arranged vertically.

According to an embodiment, a sterilizing agent may be added into the polypropylene supply part 31 to provide a sterilized polypropylene layer.

According to an embodiment, the printing unit 32 may be arranged to be spaced apart from the third and fourth thermal press rollers r3 and r4, so that the printing layer 23 may be formed on the polypropylene layer 22.

According to an embodiment, the anti-scratch unit 33 may be disposed to be spaced apart from the third and fourth thermal press rollers r3 and r4 and from the printing unit 32, so that the anti-scratch coating layer 24 may be formed on the printing layer 23.

In the present disclosure, "comprising at least one of a, b, or c" may mean "comprising only a, only b, only c, or a combination of two or more (comprising a and b, comprising b and c, comprising a and c, or comprising all a, b, and c).

Although specific embodiments have been described above in the detailed description of the present disclosure, various modifications are possible without departing from the scope of the present disclosure. Therefore, the scope of the present disclosure should not be limited to the embodiments described above, but should be determined not only by the scope of the patent claims described later and equivalents thereof.

## Claims

1. A cloth sheet for travel carrier bags, the sheet comprising:
a cloth layer configured to include a first surface and a second surface opposite to the first surface, and to constitute an inner skin;
a mesh layer configured to include a third surface and a fourth surface opposite to the third surface, and attached to the first surface in a laminated structure by thermal compression; and
a polypropylene layer configured to include a fifth surface and a sixth surface opposite to the fifth surface, attached to the third surface in a laminated structure by thermal compression, and configured to constitute an outer skin,
wherein the cloth sheet has a sterilization layer by sterilizing at least one layer among the cloth layer, the mesh layer, and the polypropylene layer.

2. The sheet of claim 1, wherein the cloth layer and the mesh layer are sterilized, or all layers are sterilized.

3. The sheet of claim 2, wherein the polypropylene layer is sterilized by mixing a sterilizing agent into a polypropylene supply part during a manufacturing process of the polypropylene layer.

4. The sheet of claim 1, wherein the polypropylene layer further comprises a printing layer for creating various logos on the fifth surface.

5. The sheet of claim 4, wherein an anti-scratch coating layer is further provided on the printing layer.

6. The sheet of claim 1, wherein sterilization treatment of the cloth layer or the mesh layer is carried out by one of following methods: coating, spraying, or placing in a solution.

7. A device for manufacturing a cloth sheet for travel carrier bags, comprising:
a first transfer roller configured to transfer a cloth layer;
a second transfer roller spaced apart from the first transfer roller and configured to transfer a mesh layer;
a polypropylene supply part spaced apart from the first and second transfer rollers;
a first thermal press roller disposed to be spaced apart from each of the first and second transfer rollers; and
a second thermal press roller disposed to face the first thermal press roller with a fine gap, and configured to primarily thermal-presses, together with the first thermal press roller, the transferred mesh layer, a polypropylene layer provided on the mesh layer, and the cloth layer provided under the mesh layer to construct a cloth sheet.

8. The device of claim 7, further comprising:
a third thermal press roller spaced apart from the first and second thermal press rollers; and
a fourth thermal press roller disposed to face the third thermal press roller with a fine gap, and configured to secondarily thermal-presses, together with the third thermal press roller, the cloth sheet consisting of the thermal-pressed cloth layer, the mesh layer, and the polypropylene layer.

9. The device of claim 8, wherein the first and second thermal press rollers are symmetrically arranged vertically, and the third and fourth thermal press rollers are symmetrically arranged vertically.

10. The device of claim 7, a sterilizing agent is mixed into the polypropylene supply part to provide a sterilized polypropylene layer.

11. The device of claim 8, a printing unit is arranged to be spaced apart from the third and fourth thermal press rollers, so that a printing layer is formed on the polypropylene layer.

12. The device of claim 11, an anti-scratch coating device is disposed to be spaced apart from the third and fourth thermal press rollers and the printing unit, so that an anti-scratch coating layer is formed on the printing layer.
